# EUROPÄISCHE PATENTSCHRIFT

(11) **EP 2 882 698 B1**
(45) Veröffentlichungstag und Bekanntmachung des Hinweises auf die Patenterteilung: **24.08.2016**
(21) Anmeldenummer: 13739346.8
(22) Anmeldetag: 12.06.2013
(51) Int. Cl.: C04B 111/28, C04B 28/02, C04B 38/10

(54) **SELBSTHÄRTENDER ZEMENTSCHAUM**
SELF-SETTING CEMENT FOAM
CIMENT MOUSSE AUTODURCISSABLE

(30) Priorität: 14.06.2012 AT 6862012
(43) Veröffentlichungstag der Anmeldung: 17.06.2015
(73) Patentinhaber: Geolyth Mineral Technologie GmbH, 4050 Traun (AT)
(72) Erfinder: ENZENHOFER, Karl, A-4050 Traun (AT); BUCHBERGER, Maximilian, A-4050 Traun (AT)
(74) Vertreter: Burger, Hannes
(86) Internationale Anmeldenummer: PCT/AT2013/050120
(87) Internationale Veröffentlichungsnummer: WO 2013/185161

(56) Entgegenhaltungen:
- EP-A2- 2 354 109
- WO-A1-2011/044605
- DE-A1- 4 327 074

## Beschreibung

Die Erfindung betrifft einen selbstaushärtenden porösen Zementschaum mit einem Protein-schaum als Strukturgeber, wobei der Zementschaum in einem ausgehärteten Zustand Poren aufweist. Weiters betrifft die Erfindung ein Verfahren zur Herstellung eines Zementschaums. Darüber hinaus hat die Erfindung eine Schaumkanone zur Herstellung einer strukturgebenden Schaumkomponente eines Zementschaums zum Gegenstand.

Ferner bezieht sich die Erfindung auf eine Vorrichtung zur Herstellung eines Zementschaums.

Zementschäume sind bereits aus dem Stand der Technik bekannt. So beschreibt beispielsweise die DE 4327074 ein Verfahren zur Herstellung eines Zementschaums, welcher mit Glasfasern verstärkt und in einem Autoklaven gebacken wird. Derartige Zementschäume sind allerdings sehr aufwendig herzustellen. In der EP2354109A2 ist ein Zementschaum der eingangs genannten Art beschrieben, während aus der DE4327074 eine Vorrichtung und eine Schaumkanone bekannt geworden sind. Die WO 2011/044605 betrifft ein Verfahren zur Herstellung eines Zementschaums.

Selbstaushärtende Zementschäume, also Zementschäume zu deren Verfestigung kein Autoklave benötigt wird und die bei Umgebungsbedingungen aushärten, haben üblicherweise den Nachteil, dass sich bei geringen Dichten mit ihnen nur sehr kleine Werte für die Flächenbelastbarkeit erzielen lassen.

Es ist daher eine Aufgabe der Erfindung einen selbstaushärtenden Zementschaum mit guten Wärmedämmeigenschaften und verbesserter mechanischer Stabilität zu schaffen.

Diese Aufgabe wird mit einem Zementschaum der eingangs genannten Art erfingdungsgemäß dadurch gelöst, dass der Zementschaum einen Wasseraufnahmekoeffizienten zwischen 0,5 und 7 kg/(m².h0,5) aufweist. An dieser Stelle sei darauf hingewiesen, dass sich der Wert des Wasseraufnahmekoeffizienten gemäß DIN EN 52617 bestimmt. Mit dem erfindungsgemäßen Wert für den Wasseraufnahmekoeffizienten geht auch ein bestimmter struktureller Aufbau des ausgehärteten Zementschaums einher.

So kann der Zementschaum Poren mit einer Größe zwischen 0,02 und 10 mm, insbesondere zwischen 0,03 und 7 mm aufweist, wobei der Anteil der Poren mit einem Durchmesser von 0,03 bis einschließlich 0,9 mm 60 bis 75%, insbesondere 70 %, beträgt. Selbstverständlich kann der Zementschaum neben den Poren der oben genannten Größen, in geringerer Zahl auch Poren mit einem kleineren oder größeren Durchmesser aufweisen.

Es hat sich herausgestellt, dass mit der erfindungsgemäßen Ausbildung optimale Werte für die Festigkeit bei gleichzeitig sehr guten Wärmedämmeigenschaften erzielt werden können.

Die Wärmedämmeigenschaften des erfindungsgemäßen Zementschaums lassen sich ohne Verschlechterung seiner statischen Eigenschaften dadurch weiter verbessern, dass der Anteil der Poren mit einer Größe von 2 bis einschließlich 7 mm 6-8 %, insbesondere 7%, beträgt.

Der erfindungsgemäße Zementschaum weist in einem ausgehärteten Zustand eine Flächenbelastbarkeit von 1500 bis 10000 kg/m² und eine Dichte von 50 bis 250 kg/m³ auf. Derartige Werte für die Flächenbelastbarkeit bei einer so geringen Dichte können mit herkömmlichen selbstaushärtenden Zementschäumen nicht erreicht werden.

Gemäß einer bevorzugten Ausführungsform der Erfindung ist der Zementschaum innerhalb von 85 min vollständig aushärtend. Unter "vollständig ausgehärtet" wird hierbei verstanden, dass der Zementschaum in einem formstabilen Zustand ist und uneingeschränkt weiterverarbeitbar ist. Die Zeitangabe für den Aushärteprozess bezieht sich auf die Aushärtezeit bei Normalbedingungen. Durch die geringe Aushärtezeit kann der erfindungsgemäße Zementschaum vor Ort sehr schnell weiterverarbeitet werden.

Die oben genannte Aufgabe lässt sich auch mit einer Schaumkanone der eingangs genannten Art erfindungsgemäß dadurch lösen, dass die Schaumkanone rohrförmig ausgebildet ist, wobei die Schaumkanone eine Einlassöffnung für eine Flüssigkeit und eine Einlassöffnung für ein Gas oder Gasgemisch aufweist, wobei stromabwärts der Einlassöffnungen zumindest ein erstes Gitter und vor einer Auslassöffnung aus der Schaumkanone zumindest ein zweites Gitter angeordnet ist und in dem Raum zwischen dem zumindest einen ersten Gitter und dem zumindest einen zweiten Gitter zumindest ein Aufschäumelement mit einer Vielzahl von Verwirbelungsstrukturen zur Erzeugung einer turbulenten Strömung zwischen dem zumindest einem ersten und dem zumindest einem zweiten Gitter angeordnet ist. Durch die spezielle Ausbildung der Schaumkanone wird ein sehr guter innerer Aufbau des damit erzeugten Strukturschaums erzielt.

Eine vorteilhafte Weiterbildung der Schaumkanone die sich durch eine optimale Luftzufuhr auszeichnet, sieht vor, dass sich ihr Querschnitt zur Einlassöffnung für die Flüssigkeit hin verjüngt, wobei die Einlassöffnung für das Gas oder Gasgemisch in einer Flanke eines sich zur Einlassöffnung für die Flüssigkeit hin verjüngenden Abschnittes angeordnet ist. Bei dieser Ausführungsform der Erfindung kann das Gasgemisch, bei welchem es sich bevorzugt um Umgebungsluft handelt, mit der einströmenden Flüssigkeit (beispielsweise ein Gemisch aus Wasser und Schaumbildner) sehr gut vermischt werden.

Gemäß einer bevorzugten Ausführungsform der Erfindung kann es vorgesehen sein, dass der Raum zwischen dem zumindest einen ersten Gitter und dem zumindest einen zweiten Gitter von dem zumindest einen Aufschäumelement aufgefüllt ist. Diese Variante der Erfindung zeichnet sich dadurch aus, dass mit ihr bei einer relativ geringen Baulänge der Schaumkanone eine optimale innere Struktur und hohe Festigkeit des Schaums erzielt werden kann.

Die der Erfindung zugrunde liegende Aufgabe lässt sich auch mit einer Vorrichtung der eingangs genannten Art lösen, welche, dass eine erfindungsgemäße Schaumkanone aufweist, wobei eine Auslassöffnung der Schaumkanone mit einer Mischkammer verbunden ist, in welcher der Zementleim mit dem Proteinschaum zu dem Zementschaum vermischt wird.

Weiters lässt sich die oben genannte Aufgabe mit einem Verfahren der eingangs genannten Art dadurch lösen, dass der strukturgebende Proteinschaum mit einem Zementleim vermischt wird, wobei eine Vorrichtung nach Anspruch 9 verwendet wird und der strukturgebende Proteinschaum eine Dichte von 36 bis einschließlich 82 kg/m³ aufweist, wobei der strukturgebende Proteinschaum mit einer Schaumkanone nach einem der Ansprüche 6 bis 8 hergestellt wird.

Zum besseren Verständnis der Erfindung wird diese anhand der nachfolgenden Figuren, welche ein nicht einschränkendes Ausführungsbeispiel betreffen, näher erläutert.

Es zeigen jeweils in stark schematisch vereinfachter Darstellung:
- Fig. 1: ein Blockdiagramm einer erfindungsmäße Vorrichtung;
- Fig. 2: einen Querschnitt durch eine erfindungsgemäße Schaumkanone.
Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Erfindungsgemäß weist ein selbstaushärtender poröser Zementschaum 2 einen Proteinschaum als Strukturgeber auf, wobei der Zementschaum einen Wasseraufnahmekoeffizienten zwischen 0,5 und 7 kg/(m².h0,5) aufweist. Der Wasseraufnahmekoeffizient (w-Wert) kann nach der Norm DIN EN 52617 bestimmt werden.

In einem ausgehärteten Zustand ist der Zementschaum von Poren mit einer Größe zwischen 0,02 und 10 mm durchsetzt. Die Größe der meisten Poren liegt bevorzugt zwischen 0,03 und 7 mm. Der Anteil der Poren mit einem Durchmesser von 0,03 bis einschließlich 0,9 mm kann bei einem erfindungsgemäßen Zementschaum 2 zwischen 60 bis 75%, bevorzugt jedoch bei ca.70 %, liegen

Darüber hinaus kann der Zementschaum eine Geschlossenzelligkeit gemäß DIN EN 4590 aufweisen, die zwischen 0,5 und 10 %, bevorzugt jedoch zwischen 1 und 7% liegt.Der erfindungsgemäße Zementschaum kann beispielswiese als Dämmplatte, als Ziegel- und Steinefüllung, als Betonfertigware, beispielsweise als Zwischendämmschicht, etc. verwendet werden.

Die Eigenschaften des Zementschaums können nach Anwendungsgebiet variieren.

Einer der Vorteile der Erfindung ist darin zu sehen, dass der Zementschaum 2 selbst aushärtend ist und nicht autoklaviert werden muss sowie hervorragende Eigenschaften hinsichtlich seiner Flächenbelastbarkeit und Wärmedämmung aufweist. So verfügt der erfindungsgemäße Zementschaum 2 bei einer geringen Dichte eine sehr hohe Flächenbelastbarkeit. Die Aushärtezeit des erfindungsgemäßen Zementschaums bei Normalbedingungen liegt bei maximal 85 Minuten, bevorzugt jedoch bei ca. 60 min.

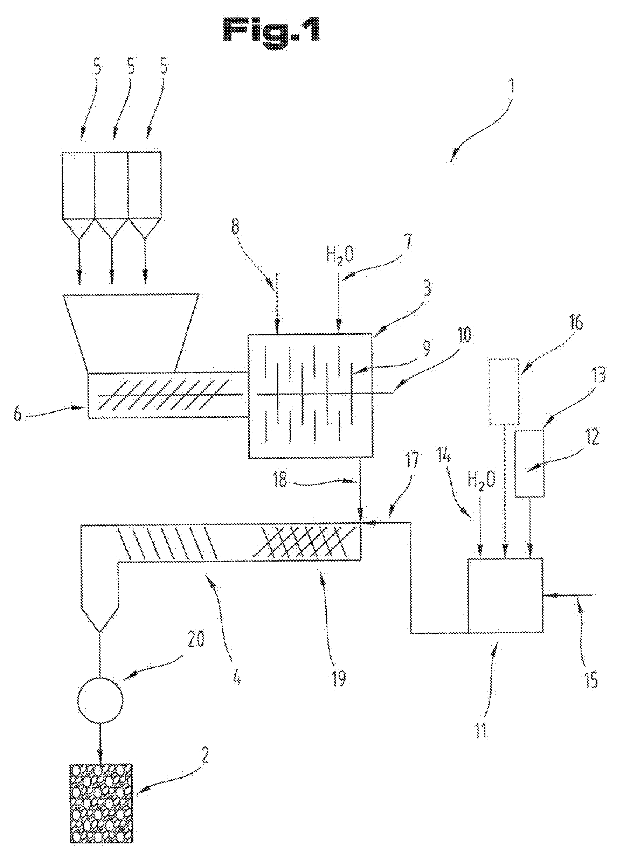

Zur Herstellung des erfindungsgemäßen Zementschaums 2 weist die Vorrichtung 1 eine erste Mischstrecke 3 sowie eine dieser in Produktionsrichtung nachgeordnete, zweite Mischstrecke 4 auf. In der ersten Mischstrecke 3 wird aus pulverförmigem Zement, welcher beispielsweise in Vorratsbehältern 5 vorrätig gehalten werden kann, und der über eine Fördervorrichtung 6, beispielsweise eine Förderschnecke, der ersten Mischstrecke 3 zugeführt wird, unter Zusatz von Wasser entsprechend Pfeil 7 ein so genannter Zementleim, also eine Mischung aus den festen Komponenten und Wasser, hergestellt. Als Wasser wird üblicherweise normales Leitungswasser verwendet, wobei selbstverständlich auch destilliertes bzw. entionisiertes oder gereinigtes Wasser eingesetzt werden kann. Gegebenenfalls können weitere Zusatzstoffe zur Vermengung mit dem pulverförmigen Zement in die erste Mischstrecke 3 aufgegeben werden, wie dies durch einen strichlierten Pfeil 8 in Fig. 1 angedeutet ist, wobei zumindest einzelne der Zusatzstoffe auch in flüssiger oder dispergierter Form zugesetzt werden können.

Es besteht die Möglichkeit, dass die Vermengung der pulverförmigen Bestandteile vor der Zugabe des Wassers gemäß Pfeil 7 erfolgt, das heißt, dass zu dem Zement zur Herstellung des Zementschaums 2 bereits diese Hilfsstoffe bzw. Verarbeitungshilfen zugesetzt und gegebenenfalls diese pulverförmigen Komponenten vorgemischt werden können.

Die Mischstrecke 3 ist als Paddel-Mischer oder Pflugschaufelmischer ausgebildet, wobei auch anderer Mischertypen, wie z.B. Freifallmischer, verwendet werden können. Erstgenannte Mischertypen haben jedoch den Vorteil, dass weniger Wasser zugesetzt werden muss - Ziel ist es möglichst wenig Wasser zu verwenden - und dass der Energieverbrauch pro m³ Zementleim relativ gering ist. Zudem kann die Gefahr der Verklebung des Mischers durch diese gerundeten Formen reduziert werden. Insbesondere kann diese Mischstrecke 3 Mischorgane 9 aufweisen, die in radialer Richtung versetzt an einer Mischstreckenwelle 10 angeordnet sind. Es können dabei in der Mischstrecke 3, beispielsweise zwischen 2 und 20 Mischorgane 9 angeordnet werden.

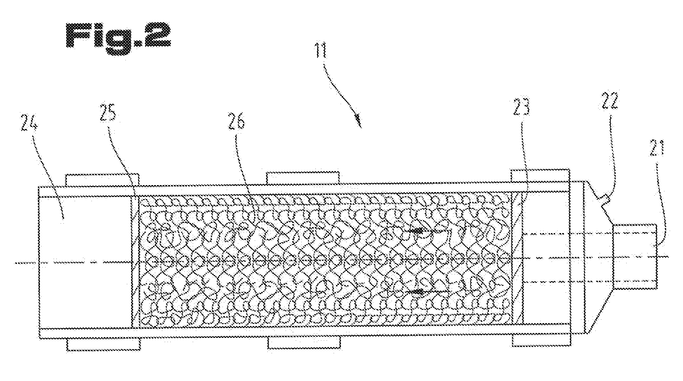

Dem Zementleim wird in der Folge ein Proteinschaum als Schaumkomponente zugesetzt, der in einer Schaumkanone 11 erzeugt wird. Nähere Details der Schaumkanone 11 sind in Fig. 2 dargestellt und weiter unten erläutert. Es wird also der Zementschaum 2, d.h. der Zement für den Zementschaum 2 nach der Erfindung nicht direkt aufgeschäumt. Die Porenbildung des Zementschaums 2 erfolgt vielmehr durch den Zusatz eines eigenen Schaums. Als Schaumkomponente wird dazu ein Proteinschaum verwendet. Als Protein 12, welches in einem entsprechenden Vorratsbehälter 13 vorrätig gehalten werden kann, wird ein tierisches oder ein pflanzliches Protein oder werden Mischungen daraus verwendet. Beispielsweise kann als Protein 12 ein Keratin, ein hydrolysiertes Keratin, oder vorzugsweise ein sojabasiertes Protein eingesetzt, das vorzugsweise alkaliresistent ist. Das Protein kann beispielsweise in einer Menge von bis zu 5 Gewichtsteilen eingesetzt werden.

Diesem Protein 12 wird wiederum Wasser, insbesondere destilliertes bzw. gereinigtes Wasser, gemäß Pfeil 14 zugesetzt und in der Schaumkanone 11 durch Einblasen von Luft gemäß Pfeil 15 der Proteinschaum erzeugt.

Wie strichliert im Bereich der Schaumkanone 11 in Fig. 1 dargestellt, können dieser Schaumkomponente ebenfalls Verarbeitungshilfsstoffe, z.B. aus einem Vorratsbehälter 16, zugesetzt werden, wobei es auch möglich ist, dass, für den Fall dass mehrere Verarbeitungshilfsstoffe zugesetzt werden, vorab eine Vermischung dieser Hilfsstoffe erfolgt.

Generell sei angemerkt, dass diese Verarbeitungshilfsstoffe für den Zusatz zur Schaumkomponente pulverförmig oder in gelöster bzw. dispergierter Form zugesetzt werden können.

Die fertige Schaumkomponente wird in der Folge gemäß Pfeil 17 dem aus der ersten Mischstrecke 3 stammenden Zementleim gemäß Pfeil 18 zugesetzt, wobei die Zugabe in der zweiten Mischstrecke 4 oder bevorzugt vor der zweiten Mischstrecke 4 erfolgt. Dazu kann dieser Mischstrecke 4 eine Fördervorrichtung 19, z.B. eine Förderschnecke, vorgeordnet sein, wobei es in diesem Fall möglich ist, dass vorerst der Schaum in die Fördervorrichtung 19 eingeführt wird, sodass diese zumindest annähernd vollständig mit dieser gefüllt ist, und danach der Zementleim in den Schaum gegeben wird, insbesondere schrittweise, wobei auch mehrere Einfüllöffnungen für den Zementleim in die Fördervorrichtung 19 vorhanden sein können. Es ist aber abweichend oder zusätzlich dazu möglich, dass der Zementleim erst in der zweiten Mischstrecke 4 dem Schaum zugemischt wird.

Die zweite Mischstrecke 4 ist insbesondere als Paddel-, Schrauben-, Wendelmischer oder statischer Mischer oder in Form einer Kombination aus den oder einzelnen dieser Mischertypen ausgebildet.

Im Rahmen der Erfindung besteht die Möglichkeit, dass die beiden Mischstrecken 3, 4 in einem einzigen Mischer kombiniert sind, wobei sie auch in diesem Fall voneinander getrennt sind, also hintereinander in diesem Mischer ausgebildet sind.

Es besteht weiters die Möglichkeit, dass die erste und/oder zweite Mischstrecke 3, 4 aus einer getrennten Fördervorrichtung 6 bzw. 19 und einem getrennten Mischer bestehen, wobei die Trennung auch lediglich so aussehen kann, dass diese getrennte Antriebe aufweisen, um unterschiedliche Drehzahlen und damit ein besseres Mischergebnis bei möglichst geringem Energieeinsatz zu ermöglichen.

In der Folge wird über eine entsprechende Fördereinrichtung 20 das fertige Gemisch aus dem Zementleim und der Schaumkomponente aus der zweiten Mischstrecke 4 abgezogen und kann dieses Gemisch in eine entsprechende Form eingefüllt werden, um darin die Selbstaushärtung des Zementleims 2 durch die entsprechend ablaufenden, chemischen Reaktionen zu ermöglichen.

Es sei darauf hingewiesen, dass der Zementschaum 2, nach der Erfindung beispielsweise in Plattenform, zum nachträglichen Aufbringen auf zu Bauwerksteile, wie zum Beispiel Wände, ausgebildet sein kann, ebenso besteht die Möglichkeit, dass mit dem Gemenge Bauelemente, beispielsweise (Hohlkammer)ziegel, zumindest teilweise gefüllt werden, beispielsweise Ziegel oder Steine. Es sind aber auch andere Formen des Zementschaums 2 möglich, wie z.B. Steine, Sanitärelemente, Elemente im Bereich des Fußbodens, beispielsweise bei Fußbodenheizungen, etc..

Obwohl in Fig. 1 nicht dargestellt, besteht im Rahmen der Erfindung die Möglichkeit, dass entsprechende Regel- und/oder Steuerorgane und/oder Messorgane innerhalb der Vorrichtung 1 vorhanden sind und können diese Regel- und/oder Steuerorgane und/oder Messorgane selbstverständlich auch EDV-unterstützt betrieben werden.

Es besteht weiters die Möglichkeit, dass zur Herstellung des Schaums anstelle von Luft auch andere Gase, wie z.B. N2, CO2, etc., verwendet werden. Des Weiteren besteht die Möglichkeit, dass dem Protein ein, insbesondere alkalisches, Treibmittel zugesetzt wird, sodass auf die Zugabe eines gesonderten Gases für das Aufschäumen des Proteins verzichtet werden kann oder die Gasmenge reduziert werden kann.

Vorzugsweise weist die Schaumkomponente auch zumindest einen Vernetzer auf, der insbesondere durch ein pflanzliches Eiweiß, gebildet ist.

Es sei an dieser Stelle angemerkt, dass die gewählte Anzahl der Mischorgane 9 in der ersten Mischstrecke 3, wie voran stehend ausgeführt, Vorteile im Hinblick auf die Produkteigenschaften des Zementschaums 2 hat. Zwar kann mit einer geringeren oder höheren Anzahl an Mischstäben 9 ebenfalls ein Zementschaum 2, das heißt ein Zementleim, hergestellt werden, allerdings wurde im Rahmen der Erprobung der Erfindung gefunden, dass mit einer Anzahl an Mischorganen 9 aus dem angegebenen Bereich die Produkteigenschaften des Zementschaums 2 verbessert sind. Es sei dabei darauf hingewiesen, dass die Anzahl der Mischorgane 9 auf eine bestimmte Große der Vorrichtung 1 bezogen ist, das heißt auf einen bestimmten Volumenausstoß an Zementschaum 2, der bis zu 50 m3/h beträgt. Es ist daher möglich, dass eine von der angegebenen Anzahl von Mischorganen 9 abweichende Anzahl bei einer anderen Auslegung der Anlage 1 von Vorteil ist.

Des Weiteren wurde im Rahmen der Erfindung gefunden, dass eine Umfangsgeschwindigkeit ausgewählt aus einem Bereich mit einer unteren Grenze von 4 m/s, insbesondere 5,5 m/s, und einer oberen Grenze von 12 m/s, insbesondere 11 m/s, mit der die Mischstreckenwelle 10 der Mischstrecke 3 betrieben wird, für das angegebene Produktionsvolumen ebenfalls Vorteile in Hinblick auf die Produkteigenschaften des Zementschaums 2 hat. Insbesondere ist dabei von Vorteil, wenn eine Anzahl von 16 Mischorganen 9 bei einer Umfangsgeschwindigkeit von 4 m/s und eine Anzahl von 4 Mischorganen 9 bei einer Umfangsgeschwindigkeit von 11 m/s der Mischstreckenwelle 10 angeordnet werden, wobei diese Angaben als untere und obere Grenze eines Bereichs für die Anzahl an Mischorganen 9 in Bezug auf die Umfangsgeschwindigkeit der Mischstreckenwelle 10 zu verstehen sind.

Es sei in diesem Zusammenhang nochmals darauf hingewiesen, dass insbesondere für die erste Mischstrecke 3, aber auch für die zweite Mischstrecke 4, Kombinationen aus verschiedenen Typen von Mischorganen 9 verwendet werden können, beispielsweise fünf Statorstäbe und vier Paddel-Stäbe als Rotor. Es kann generell eine Kombination aus Stator- und Rotorstäben in den Mischstrecken 3, 4 verwendet werden.

Für einen Mengenstrom zwischen 5 kg/min, insbesondere 15 kg/min, und 50 kg/min, insbesondere 35 kg/min, an den pulverförmigen Bestandteilen zur Herstellung des Zementleims, kann ein Wasservolumen zwischen 150 l/h, insbesondere 300 l/h und 1000l/h, insbesondere 700 l/h, der ersten Mischstrecke 3 zugeführt werden. Dabei konnte wiederum eine Wechselwirkung mit der Anzahl der Mischorgane 9 in der ersten Mischstrecke 3 im Hinblick auf die Produkteigenschaften des Zementschaums 2 beobachtet werden. Insbesondere von Vorteil ist, wenn bei einer Anzahl von 6 Mischorganen 9 ein Volumenstrom von 250 l/h Wasser und bei einer Anzahl von 18 Mischorganen 9 ein Volumenstrom von 800l/h Wasser den pulverförmigen Bestandteilen des Zements zur Herstellung des Zementleims 2 zugesetzt wird, wobei auch diese Angaben wieder als untere und obere Grenze eines Bereichs für die Anzahl an Mischorganen 9 in Bezug auf den Wasser-Volumenstrom zu verstehen sind.

Für die Zugabe des Wassers zu dem pulverförmigen Zement in der ersten Mischstrecke 3 ist es von Vorteil, wenn das Wasser verteilt über mehrere Bereiche der Mischstrecke 3 zugeführt wird, insbesondere über Sprühdüsen. Z.B. können über den Umfang der ersten Mischstrecke 3 verteilt zwischen 2 und 10, insbesondere zwischen 3 und 6, Sprühdüsen angeordnet sein.

Vorzugsweise werden pro Mengenanteil Zementleim zwischen 30 Volumenanteile und 60 Volumenanteile Schaumkomponente aus der Schaumkanone 11 in die zweite Mischstrecke 4 aufgegeben, insbesondere zwischen 40 und 50 Volumenanteile Schaumkomponente.

Vorzugsweise hat die Schaumkomponente eine Dichte ausgewählt aus einem Bereich mit einer unteren Grenze von 36 kg/m3 und einer oberen Grenze von 82 kg/m3.

Die Umfangsgeschwindigkeit, mit der die zweite Mischstrecke 4 betrieben wird, ist vorzugsweise bei dem voranstehend angegebenen Produktionsvolumen und in Hinblick auf den Volumenstrom an zugesetzter Schaumkomponente, kleiner als jene der ersten Mischstrecke 3. Die Mischorgane der zweiten Mischstrecke 4 sind dabei so angeordnet, dass eine homogene Vermengung innerhalb der Mischstrecke 4 zwischen dem Zementleim und der Schaumkomponente erfolgt und die Schaumkomponente schonend mit dem Zementleim vermischt wird.

Es kann mit der erfindungsgemäßen Vorrichtung 1 und dem erfindungsgemäßen Verfahren ein Zementschaum 2 hergestellt werden, der ein Raumgewicht von beispielsweise 80 kg/m3 aufweist, insbesondere ein Raumgewicht zwischen 50 kg/m3 und 250 kg/m3. Dabei bezieht sich diese Angabe auf den vollständig getrockneten Zementschaum 2.

Wie in Fig. 2 dargestellt weist die Schaumkanone 11 eine Einlassöffnung 21 für ein Gemisch aus Protein und Wasser sowie eine Einlassöffnung 22 für Luft auf. Stromabwärts nach den Einlassöffnungen 21, 22 ist ein erstes Gitter 23 oder ein Block aus mehreren hintereinander angeordneten Gittern angeordnet. Auch vor einer Auslassöffnung 24 der Schaumkanone 11 ist ein Gitter 25 oder ein Block aus mehreren hintereinander angeordneten Gittern vorgesehen. In dem Raum zwischen den Gittern 23 und 25 sind ein oder mehrere Aufschäumelemente 26 mit einer Vielzahl von Verwirbelungsstrukturen zur Erzeugung einer turbulenten Strömung angeordnet. Das Aufschäumelement 26 kann hierbei den gesamten Raum zwischen den Gittern ausfüllen. Das Aufschäumelement könnte beispielsweise durch ein Drahtgeflecht, wie einem Drahtschwamm, gebildet sein. Es ist jedoch auch möglich, dass mehrere Aufschäumelemente 26 aus Kunststoff vorgesehen sind, beispielsweise von schraubenförmiger Gestalt, die dicht an dicht gepackt in dem Raum zwischen den Gittern 23 und 25 angeordnet sind. Anstelle von schraubenförmigen Aufschäumelementen 26 können auch anders geformte Aufschäumelemente verwendet werden, beispielsweise Elemente mit einem zylinderförmigen Stamm, an dem radial abstehende Fortsätze angeordnet sind. Die Aufschäumelemente 26 bzw. das Aufschäumelement können bzw. kann nach Entfernen der Gitter 23, 25 aus der Schaumkanone 11 entnommen und ausgetauscht werden. Wesentlich an den Aufschäumelementen 26 ist, dass zum einen eine turbulente Strömung erzeugt wird und zum anderen die Durchlaufstrecke für das Schaummittel durch die Schaumkanone 11 so erhöht wird, dass sich an der Auslassöffnung 24 die gewünschte Festigkeit des Schaums ergibt. 24 die gewünschte Festigkeit des Schaums ergibt. Um die gewünschte Strukturdes Zementschaums zu erzielen, hat es sich als besonders vorteilhaft herausgestellt, wenn das Gemisch aus Protein und Wasser mit einem Druck zwischen 0,5 und 5 bar in die Einlassöffnung 21 der Schaumkanone 11 einströmt, wobei an der Auslassöffnung 24 der Schaum mit einem Druck zwischen 0,5 bis 5 bar ausströmt.Beispielsweise kann der Druckverlust zwischen Einström- und Ausströmseite zwischen 0,1 und 1 bar liegen, besonders bevorzugt beträgt der Druckverlust in der Schaumkanone 11 ca. 0,5 bar. So kann bei einem Einströmdruck von 2,5 bar der Ausströmdruck aus der Schaumkanone 11 0,5 bar betragen.

Durch die Aufschäumelemente 24 wird ein besonders homogener Aufbau des Schaums erzielt und die Struktur des Proteinschaums verfestigt, wobei sich für den erhaltenen Strukturschaum eine Dichte von 36 bis 82 kg/m³ ergibt.

Um eine gute Durchmischung von Luft mit dem Gemisch aus Protein und Wasser zu ermöglichen, kann sich der Querschnitt der Schaumkanone zur Einlassöffnung hin verjüngen, wobei die Einlassöffnung für Luft in einer Flanke eines sich zur Einlassöffnung für die Flüssigkeit hin verjüngenden Abschnittes angeordnet sein kann.

Die Ausführungsbeispiele zeigen mögliche Ausführungsvarianten der erfindungsgemäßen Schaumkanone bzw. der erfindungsgemäßen Vorrichtung , wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, und unter den Schutzbereich der unabhängigen Ansprüche fallen vom Schutzumfang mit umfasst.

Der Ordnung halber sei abschließend darauf hingewiesen, dass zum besseren Verständnis des Aufbaus der erfindungsgemäßen Schaumkanone bzw. der erfindungsgemäßen Vorrichtung diese bzw. deren Bestandteile teilweise unmaßstäblich und/oder vergrößert und/oder verkleinert dargestellt wurden.

### Bezugszeichenaufstellung

- 1: Vorrichtung
- 2: Zementschaum
- 3: Mischstrecke
- 4: Mischstrecke
- 5: Vorratsbehälter

- 6: Fördervorrichtung
- 7: Pfeil
- 8: Pfeil
- 9: Mischorgan
- 10: Mischstreckenwelle

- 11: Schaumkanone
- 12: Protein
- 13: Vorratsbehälter
- 14: Pfeil
- 15: Pfeil

- 16: Vorratsbehälter
- 17: Pfeil
- 18: Pfeil
- 19: Fördereinrichtung
- 20: Fördereinrichtung

- 21: Einlassöffnung
- 22: Einlassöffnung
- 23: Gitter
- 24: Auslassöffnung
- 25: Gitter

- 26: Aufschäumelement

## Patentansprüche

1. Selbstaushärtender poröser Zementschaum (2) mit einem Proteinschaum als Strukturgeber, wobei der Zementschaum (2) in einem ausgehärteten Zustand Poren und einen Wasseraufnahmekoeffizienten zwischen 0,5 und 7 kg/(m².h0,5) aufweist, **dadurch gekennzeichnet, dass** der Zementschaum in einem ausgehärteten Zustand Poren mit einer Größe zwischen 0,02 und 10 mm, insbesondere zwischen 0,03 und 7 mm aufweist, wobei der Anteil der Poren mit einem Durchmesser von 0,03 bis einschließlich 0,9 mm 60 bis 75%, insbesondere 70 %, beträgt

2. Zementschaum nach Anspruch 1, **dadurch gekennzeichnet, dass** in einem ausgehärteten Zustand der Anteil der Poren mit einer Größe von 2 bis einschließlich 7 mm 6-8 %, insbesondere 7%, beträgt.

3. Zementschaum nach Anspruch 1 oder 2, **dadurch gekennzeichnet, dass** er in einem ausgehärteten Zustand eine Flächenbelastbarkeit von 1500 bis 10000 kg/m² aufweist.

4. Zementschaum nach einem der Ansprüche 1 bis 3, **dadurch gekennzeichnet, dass** er in einem ausgehärteten Zustand eine Dichte von 50 bis 250 kg/m³ aufweist.

5. Zementschaum nach einem der Ansprüche 1 bis 4, **dadurch gekennzeichnet, dass** er innerhalb von 85 min vollständig aushärtend ist.

6. Schaumkanone (11) zur Herstellung einer strukturgebenden Schaumkomponente eines Zementschaums (2), wobei die Schaumkanone (11) rohrförmig ausgebildet ist, **dadurch gekennzeichnet, dass**, die Schaumkanone (11) eine Einlassöffnung (21) für eine Flüssigkeit und eine Einlassöffnung (22) für ein Gas oder Gasgemisch aufweist, wobei stromabwärts der Einlassöffnungen (21, 22) für die Flüssigkeit und das Gas oder Gasgemisch zumindest ein erstes Gitter (23) und vor einer Auslassöffnung (24) aus der Schaumkanone (11) zumindest ein zweites Gitter (25) angeordnet ist und in dem Raum zwischen dem zumindest einen ersten Gitter (23) und dem zumindest einen zweiten Gitter (25) zumindest ein Aufschäumelement (26) mit einer Vielzahl von Verwirbelungsstrukturen zur Erzeugung einer turbulenten Strömung zwischen dem zumindest einem ersten Gitter (23) und dem zumindest einem zweiten Gitter (25) angeordnet ist.

7. Schaumkanone nach Anspruch 6, **dadurch gekennzeichnet, dass** sich ihr Querschnitt zur Einlassöffnung (21) für die Flüssigkeit hin verjüngt, wobei die Einlassöffnung (22) für das Gas oder Gasgemisch in einer Flanke eines sich zur Einlassöffnung (21) für die Flüssigkeit hin verjüngenden Abschnittes angeordnet ist.

8. Schaumkanone nach Anspruch 6 oder 7, **dadurch gekennzeichnet, dass** der Raum zwischen dem zumindest einen ersten Gitter (23) und dem zumindest einen zweiten Gitter (25) von dem zumindest einen Aufschäumelement (26) aufgefüllt ist.

9. Vorrichtung (1) zur Herstellung eines selbsthärtenden Zementschaums (2) **dadurch gekennzeichnet, dass** die Vorrichtung (1) eine Schaumkanone (11) nach einem der Ansprüche 6 bis 8 aufweist, wobei eine Auslassöffnung der Schaumkanone (11) mit einer Mischkammer verbunden ist, in welcher der Zementleim mit dem Proteinschaum zu dem Zementschaum vermischt wird.

10. Verfahren zur Herstellung eines Zementschaums (2) nach einem der Ansprüche 1 bis 5, **dadurch gekennzeichnet, dass** der strukturgebende Proteinschaum mit einem Zementleim vermischt wird, wobei eine Vorrichtung nach Anspruch 9 verwendet wird und der strukturgebende Proteinschaum eine Dichte von 36 bis einschließlich 82 kg/m³ aufweist, wobei der strukturgebende Proteinschaum mit einer Schaumkanone (11) nach einem der Ansprüche 6 bis 8 hergestellt wird.

## Claims

1. A self-setting porous cement foam (2) comprising a protein foam as the structuring agent, wherein when set, the cement foam (2) comprises pores and has a water absorption coefficient of between 0.5 and 7 kg/(m².h0.5), **characterized in that** when set, the cement foam has pores with a size of between 0.02 and 10 mm, in particular between 0.03 and 7 mm, wherein the proportion of pores with a diameter of 0.03 to 0.9 mm inclusive is 60% to 75%, in particular 70 %.

2. The cement foam as claimed in claim 1, **characterized in that** when set, the proportion of pores with a size of 2 to 7 mm inclusive is 6-8 %, in particular 7%.

3. The cement foam as claimed in claim 1 or claim 2, **characterized in that** when it is set, it has a surface load of 1500 to 10000 kg/m².

4. The cement foam as claimed in one of claims 1 to 3, **characterized in that** when it is set, it has a density of 50 to 250 kg/m³.

5. The cement foam as claimed in one of claims 1 to 4, **characterized in that** it is completely set within 85 min.

6. A foam gun (11) for producing a structure-imparting foaming component of a cement foam (2), wherein the foam gun (11) is tubular in shape, **characterized in that** the foam gun (11) comprises an inlet orifice (21) for a liquid and an inlet orifice (22) for a gas or gas mixture, wherein at least one first mesh (23) is disposed downstream of the inlet orifices (21, 22) for the liquid and the gas or gas mixture and at least one second mesh (25) is disposed in front of an outlet orifice (24) from the foam gun (11), and at least one foaming element (26) having a plurality of baffle structures for the production of a turbulent flow between the at least one first mesh (23) and the at least one second mesh (25) is disposed in the space between the at least one first mesh (23) and the at least one second mesh (25).

7. The foam gun as claimed in claim 6, **characterized in that** its cross-section tapers towards the inlet orifice (21) for the liquid, wherein the inlet orifice (22) for the gas or gas mixture is disposed in a flank of a portion tapering towards the inlet orifice (21) for the liquid.

8. The foam gun as claimed in claim 6 or 7, **characterized in that** the space between the at least one first mesh (23) and the at least one second mesh (25) is filled by the at least one foaming element (26).

9. A device (1) for producing a self-setting cement foam (2), **characterized in that** the device (1) has a foam gun (11) as claimed in one of claims 6 to 8, wherein an outlet orifice of the foam gun (11) is connected to a mixing chamber in which the cement paste is mixed with the protein foam to produce the cement foam.

10. A method for producing a cement foam (2) as claimed in one of claims 1 to 5, **characterized in that** the structure-imparting protein foam is mixed with a cement paste, wherein a device as claimed in claim 9 is used and the structure-imparting protein foam has a density of 36 to 82 kg/m³ inclusive, wherein the structure-imparting protein foam is produced by means of a foam gun (11) as claimed in one of claims 6 to 8.

## Revendications

1. Ciment mousse poreux autodurcissable (2) avec une mousse de protéine comme agent structurant, dans lequel le ciment mousse (2) présente des pores dans un état durci, et un coefficient d'absorption d'eau compris entre 0,5 et 7 kg/(m².h0,5), **caractérisé en ce que** le ciment mousse présente des pores dans un état durci, d'une taille comprise entre 0,02 et 10 mm, en particulier entre 0,03 et 7 mm, dans lequel la proportion des pores ayant un diamètre de 0,03 à 0,9 mm inclus est de 60 à 75 %, en particulier de 70 %.

2. Ciment mousse selon la revendication 1, **caractérisé en ce que** dans un état durci, la proportion des pores ayant une taille de 2 à 7 mm inclus est de 6 à 8 %, en particulier de 7 % en poids.

3. Ciment mousse selon la revendication 1 ou 2, **caractérisé en ce que** dans un état durci, il comprend une charge de surface admissible de 1 500 à 10 000 kg/m².

4. Ciment mousse selon lune quelconque des revendications 1 à 3, **caractérisé en ce que** dans un état durci, il présente une densité de 50 à 250 kg/m³.

5. Ciment mousse selon l'une quelconque des revendications 1 à 4, **caractérisé en ce que** qu'il est complètement durci après 85 min.

6. Canon à mousse (11) pour produire un composant de mousse conférant une structure à un ciment mousse (2), **caractérisé en ce que** le canon à mousse (11) est réalisé de forme tubulaire, **caractérisé en ce que** le canon à mousse (11) a une ouverture d'admission (21) pour un liquide et une ouverture d'admission (22) pour un gaz ou un mélange de gaz, dans lequel en aval des ouvertures d'admission (21, 22) pour le liquide et le gaz ou le mélange de gaz est agencée au moins une première grille (23), et devant une ouverture de sortie (24) du canon à mousse (11) est agencée au moins une seconde grille (25), et dans l'espace situé entre la au moins une première grille (23) et la au moins une seconde grille (25) est agencé au moins un élément de mous sage (26) comportant une pluralité de structures de turbulence pour générer un écoulement turbulent entre la au moins une première grille (23) et la au moins une seconde grille (25).

7. Canon à mousse selon la revendication 6, **caractérisé en ce que** sa section transversale pour l'ouverture d'admission (21) pour le liquide est effilée vers l'intérieur, dans lequel l'ouverture d'admission (22) pour le gaz ou le mélange de gaz est disposée dans un bord d'une section transversale effilée vers l'intérieur de l'ouverture d'admission (21) pour le liquide.

8. Canon à mousse selon la revendication 6 ou 7, **caractérisé en ce que** l'espace situé entre la au moins une première grille (23) et la au moins une seconde grille (25) est rempli par au moins un élément de mous sage (26).

9. Dispositif (1) pour la production d'un ciment mousse autodurcissable (2), **caractérisé en ce que** le dispositif (1) comporte un canon à mousse (11) selon l'une quelconque des revendications 6 à 8, dans lequel une ouverture de sortie du canon à mousse (11) est reliée à une chambre de mélange, dans laquelle la pâte de ciment est mélangée avec de la mousse de protéine pour obtenir le ciment mousse.

10. Procédé de production d'un ciment mousse (2) selon l'une quelconque des revendications 1 à 5, **caractérisé en ce que** la mousse de protéine structurante est mélangée avec une pâte de ciment, dans lequel un dispositif selon la revendication 9 est utilisé, et la mousse de protéine structurante a une densité de 36 à 82 kg/m³ inclus, dans lequel la mousse de protéine structurante est produite à l'aide d'un canon à mousse (11) selon l'une quelconque des revendications 6 à 8.
